# EUROPÄISCHE PATENTSCHRIFT

(11) **EP 0 376 193 B1**
(45) Veröffentlichungstag und Bekanntmachung des Hinweises auf die Patenterteilung: **30.06.1993**
(21) Anmeldenummer: 89123767.9
(22) Anmeldetag: 22.12.1989
(51) Int. Cl.: C12G 3/08

(54) **Verfahren zur Entfernung von Ethanol aus durch Vergärung erzeugten Getränken**
Method of separating ethanol from beverages obtained by fermentation
Procédé d'extraction de l'éthanol dans des boissons obtenues par fermentation

(30) Priorität: 24.12.1988 DE 3843908
(43) Veröffentlichungstag der Anmeldung: 04.07.1990
(73) Patentinhaber: SKW Trostberg Aktiengesellschaft, 83308 Trostberg (DE)
(72) Erfinder: Zobel, Rudolf, D-8221 Tacherting (DE); Schütz, Erwin, Dr., D-8223 Trostberg (DE); Vollbrecht, Heinz-Rüdiger, Dr., D-8226 Altenmarkt (DE); Faust, Robert, D-8268 Garching (DE)
(74) Vertreter: Huber, Bernhard, Dipl.-Chem.

(56) Entgegenhaltungen:
- EP-A- 0 245 845
- DE-A- 2 902 067
- DE-A- 2 912 316

## Beschreibung

Die vorliegende Erfindung betrifft ein Verfahren zur Entfernung von Ethanol aus durch Vergärung erzeugten Getränken durch Extraktion mit Hilfe von komprimiertem CO₂.

Es besteht ein allgemeines Bedürfnis, alkoholischen Getränken, die durch alkoholische Vergärung von zuckerhaltigen wäßrigen Flüssigkeiten erhalten wurden, den Alkohol weitgehend zu entziehen, ohne die geschmackliche Qualität der Ausgangsgetränke negativ zu beeinflussen. Beispiele für solche alkoholische Getränke sind Wein, Fruchtwein wie z.B. Apfelwein, Schaumwein oder Sekt, aber auch Bier.

Es ist bereits eine Reihe von Verfahren bekannt, welche die Herstellung von alkoholreduzierten bzw. alkoholfreien Getränken betreffen, die aber alle mit gewissen Nachteilen behaftet sind.

Die älteren Verfahren bedienen sich für die Alkoholentfernung im wesentlichen der Destillation oder der Membrantrennung, wobei die Gewinnung von entalkoholisierten Getränken mit weniger als 0,5 Vol-% Alkohol gewisse Schwierigkeiten bereitet, die vor allem darauf zurückzuführen sind, daß diese Verfahren eine ungenügende Trennwirkung zwischen dem Ethanol einerseits und den leicht flüchtigen Aroma- bzw. Geschmacksstoffen andererseits aufweisen. Außerdem kann es bei den Destillationsverfahren wegen der vergleichsweise hohen Temperaturen zu unerwünschten Schädigungen der Aroma- bzw. Geschmacksstoffe kommen.

In neuerer Zeit sind auch Entalkoholisierungsverfahren durch Extraktion mit Hilfe von komprimierten Gasen wie z.B. CO₂ beschrieben worden. So wird in der DE-OS 29 02 067 bzw. der DE-OS 30 24 055 vorgeschlagen, den Alkohol mit Hilfe von flüssigem oder überkritischem CO₂ zu entfernen und ihn anschließend vom CO₂ durch Entspannung abzutrennen. Mit diesen Verfahren läßt sich der Alkoholgehalt jedoch nur auf 1 bis 2 Vol.-% reduzieren. Dies trifft auch auf das Verfahren der DE-OS 29 12 316 zu, welches ein nur angegorenes Getränk (Jungbier oder Jungwein) mit flüssigem CO₂ behandelt und das so behandelte Getränk einer Nachgärung unterwirft.

Alkoholarme Getränke lassen sich mit Hilfe des Verfahrens der EP-A 77 745 herstellen, welches in zwei Stufen durchgeführt wird. In der ersten Stufe wird mit flüssigem CO₂, d.h. bei unterkritischem Druck, die Aromastoffe und in der zweiten Stufe der Alkohol extrahiert. Anschließend wird die Aromafraktion mit dem entalkoholisierten Getränk wieder vermischt. Besondere Probleme bereitet hierbei ebenfalls die saubere Trennung von Ethanol und Aromastoffen, d.h. die beiden Ziele, nämlich möglichst weitgehende Entfernung des Ethanols und Beibehaltung der Geschmack- und Aromastoffe im Getränk, sind nur schwer zu realisieren.

Deshalb wird in der DE-OS 33 13 530 vorgeschlagen, nach der Entfernung des Ethanols mit flüssigen oder überkritischen Lösemitteln die ethanolhaltige Lösungsmittelphase über ein Adsorptionsmittel wie z.B. Aktivkohle zu leiten. Dieses Verfahren ist jedoch ziemlich aufwendig, weil das Adsorptionsmittel wieder regeneriert werden muß. Außerdem kann nicht ausgeschlossen werden, daß auch wertvolle Aromastoffe mit adsorbiert werden und somit verlorengehen.

Ebenfalls aufwendig ist das Verfahren gemäß der DE-OS 35 42 757, wobei man zunächst die Ausgangsgetränke einer Hochdruckextraktion mit CO₂ zur Gewinnung einer an Aromastoffen reichen alkoholischen Fraktion unterwirft, dann den Ethanol-Gehalt des Restgetränkes durch Vakuumdestillation in einer Rektifizierkolonne reduziert sowie gleichzeitig eine gegenüber Ethanol schwerer siedende Aromafraktion gewinnt und anschließend die beiden Aromafraktionen dem alkoholreduzierten Restgetränk wieder zugibt.

Der vorliegenden Erfindung liegt daher die Aufgabe zugrunde, ein Verfahren zur Entfernung von Ethanol aus durch Vergärung erzeugten Getränken durch direkte Extraktion des Ethanols mit komprimiertem CO₂ als Extraktionsmittel, im Gegenstrom und Abscheidung des extrahierten Wasser-Ethanol-Gemisches aus dem Extraktionsmittel durch Dichteerniedrigung des komprimierten Gases, zu entwickeln, welches die genannten Nachteile des Standes der Technik nicht aufweist, sondern mit geringem technischen Aufwand eine weitgehende Reduzierung des Ethanols erreicht, ohne daß wichtige Aroma- und Geschmackstoffe verlorengehen.

Diese Aufgabe wird erfindungsgemäß dadurch gelöst, daß das CO₂ nach der Dichteerniedrigung einer Gaswäsche mit 10 bis 300 g Wasser pro kg CO₂ unterzogen wird und mit einem Ethanol-Gehalt von weniger als 0,4 g/kg in die Extraktionsstufe zurückgeführt wird.

Es hat sich nämlich überraschenderweise gezeigt, daß man auf diese relativ einfache Weise entalkoholisierte Getränke mit einem Alkoholgehalt von weniger als 0,5 Vol.-% und guten sensorischen Eigenschaften gewinnen kann.

Beim Verfahren der Erfindung wird das Ausgangsgetränk, das im Falle von Wein einen Alkoholgehalt von bis zu ca. 9 bis 12 Vol.-% aufweisen kann, einer Hochdruckextraktion im Gegenstrom mit komprimiertem CO₂, unterworfen. Die Extraktionsbedingungen hinsichtlich Druck und Temperatur sind hierbei in weiten Grenzen variierbar, d.h. man kann die Extraktion sowohl mit flüssigem als auch mit überkritischem CO₂ durchführen. Vorzugsweise erfolgt die Hochdruckextraktion bei einem Druck von 75 bis 300 bar. Die Temperatur sollte so gewählt werden, daß die temperaturempfindlichen Geschmack- bzw. Aromastoffe nicht geschädigt werden. Deshalb sollte die Extraktionstemperatur nicht wesentlich über 40°C hinausgehen, sondern in der Regel 10 bis 35°C betragen.

Die Menge des für die Extraktion verwendeten Kohlendioxids richtet sich im wesentlichen nach dem Ethanol-Ausgangsgehalt des Getränkes und beträgt zum Beispiel bei Wein 5 bis 100 kg, vorzugsweise 10 bis 40 kg CO₂ pro kg zu behandelndem Getränk.

Es ist erfindungswesentlich, daß die Extraktion des Alkohols aus dem Getränk durch Gegenstromkontakt zwischen Getränk und CO₂ durchgeführt wird, da nur auf diese Weise eine optimale Beladung des CO₂ mit Ethanol erreicht wird, welche im allgemeinen bei 3 bis 8 g Ethanol pro kg CO₂ liegt.

Leicht flüchtige Aromatstoffe können gewünschtenfalls vor der erfindungsgemäßen Extraktion des Alkohols entfernt werden, z.B. mit überkritischem CO₂.

Die Hochdruckextraktion kann in üblichen Extraktionsapparaten durchgeführt werden. Es hat sich jedoch als vorteilhaft erwiesen, die Gegenstromextraktion in einer Kolonne, besonders vorteilhaft in einer Füllkörperkolonne, vorzunehmen. Die Füllkörperkolonne kann hierbei mit den üblichen geregelten oder ungeregelten Packungen wie z.B. Raschig-Ringen oder Pall-Ringen ausgestattet sein.

Nach der Hochdruckextraktion und der Beladung des CO₂ mit Ethanol und einem gewissen Anteil Wasser wird erfindungsgemäß eine Abscheidung des Ethanol-Wasser-Gemisches aus dem CO₂ durch Dichteerniedrigung des CO₂ vorgenommen. Die Abscheidebedingungen hinsichtlich Druck und Temperatur sind in weiten Grenzen variierbar. Bevorzugt werden ein Abscheidedruck von 30 bis 60 bar, besonders bevorzugt von 35 bis 50 bar, sowie eine Abscheidetemperatur von -10°C bis +25°C. Bei diesen bevorzugten Bedingungen wird der Großteil an Ethanol und Wasser in Form einer 30 bis 70 % Ethanol enthaltenden Ethanol/Wasser-Lösung abgeschieden.

Das verbleibende CO₂-Gas enthält nur noch relativ geringe Mengen an Ethanol, die in der Regel bei weniger als 1 g pro kg CO₂ liegen.

Um auch diese Restmengen an Ethanol aus dem CO₂ zu entfernen, schließt sich beim erfindungsgemäßen Verfahren an die Dichteerniedrigung eine Behandlung mit Wasser an, bei der das CO₂ nahezu vollständig regeneriert wird. Diese Gaswäsche mit Wasser wird vorzugsweise bei den gleichen Druck- und Temperaturbedingungen wie bei der Entspannung durchgeführt. Alternativ oder zusätzlich kann eine Regenerierung des CO₂ mit Wasser unmittelbar vor der Extraktion unter gleichen Temperatur- und Druckbedingungen wie bei der Extraktion erfolgen. Der bevorzugte Temperaturbereich für die Durchführung der Gaswäsche liegt bei 10°C bis 40°C. Die Gaswäsche kann nach bekannten Verfahren und mit üblichen technischen Vorrichtungen problemlos durchgeführt werden. Vorzugsweise werden wie bei der Extraktion Füllkörperkolonnen mit geregelten oder ungeregelten Packungen eingesetzt. Nach der Gaswäsche kann das CO₂ direkt ohne sonstige weitere Behandlung wieder auf die Extraktionsbedingungen gebracht und nach entsprechender Komprimierung oder Kondensation und ggf. Erwärmung oder Abkühlung wieder in die Extraktionsstufe zurückgeführt werden. Auf diese Weise ist es möglich, das erfindungsgemäße Verfahren im Hinblick auf die CO₂-Gasführung kontinuierlich durchzuführen.

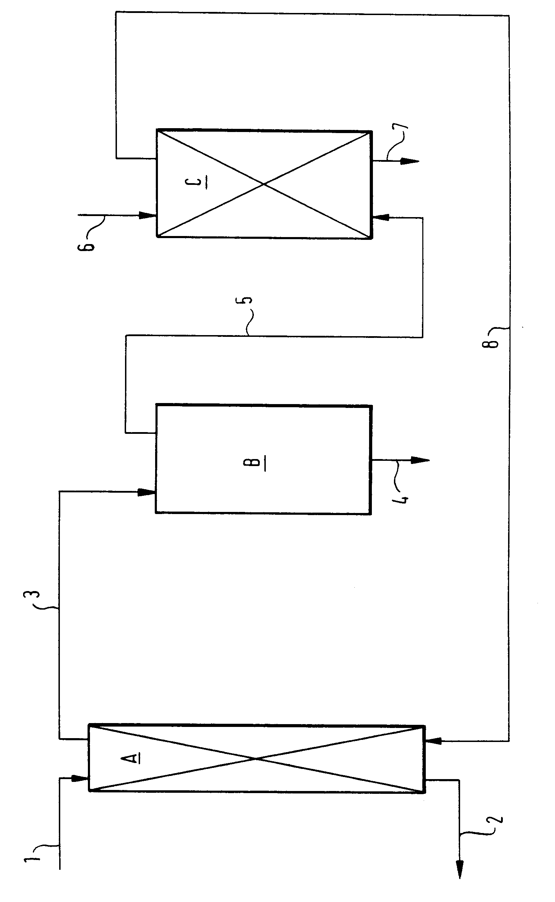

In der Figur der beigefügten Zeichnung wird das erfindungsgemäße Verfahren in Form eines Blockschemas graphisch dargestellt.

In der Füllkörperkolonne (A) wird über Leitung (1) das zu entalkoholisierende Ausgangsgetränk von oben eingespeist, während komprimiertes CO₂ im Gegenstrom dazu von unten über Leitung (8) in die Kolonne eingeführt wird. Nach der Extraktion wird das Getränk über Leitung (2) ausgetragen, während das mit Ethanol und Wasser beladene CO₂ am Kolonnenkopf austritt und über Leitung (3) in den Abscheider (B) weitergeführt wird. Dort wird das CO₂ entspannt und gleichzeitig die Hauptmenge des Ethanols und Wassers abgeschieden und über Leitung (4) wird das entspannte CO₂-Gas ausgetragen. Das entspannte CO₂-Gas, welches noch geringe Mengen an Ethanol enthält, gelangt zur Wäsche über Leitung (5) in die Kolonne (C), die über die Leitung (6) mit Wasser beschickt wird. Nach der Gaswäsche wird das regenerierte CO₂ über Leitung (8) abgesogen und komprimiert und nach der Komprimierung wieder in die Kolonne (A) zurückgeführt, während das Wasser-Ethanol-Gemisch über Leitung (7) abgezogen wird.

Mit Hilfe des erfindungsgemäßen Verfahrens ist es möglich, unter schonenden Bedingungen alkoholhaltige Getränke wie Wein etc. auf einen Restgehalt von < 0,5 Vol.-% an Alkohol zu reduzieren, ohne die sensorischen Eigenschaften des Getränkes wesentlich zu beeinträchtigen.

Darüber hinaus kann das Verfahren mit relativ geringem technischen Aufwand verwirklicht werden, so daß es sich in besonderem Maße für den technischen Maßstab eignet.

Die nachfolgenden Beispiele sollen die Erfindung unter Bezugnahme auf die Zeichnung erläutern.

### Beispiel 1 (Vergleich)

### Entalkoholisierung von Wein ohne Regenerierung des Lösemittels CO₂ mit Wasser

Am Kopf der mit 15 mm Pall-Ringen gefüllten Hochdruck-Kolonne A wird mit Hilfe einer Membrandosierpumpe ein auf 35°C temperierter Wein (8,7 Gew.-% Ethanol) in einer Menge von 10 kg/h über (1) eindosiert. Von unten nach oben wird die Kolonne von 300 kg/h CO₂, welches durch (8) eingeführt wird, unter einem Druck von 150 bar durchströmt. Das Kohlendioxid entzieht dabei dem spezifisch schwereren Wein den Alkohol. Das mit Ethanol und Wasser beladene CO₂ wird im Abscheider B auf 50 bar entspannt. Als Extrakt erhält man etwa 1,7 kg/h einer 40 eigen wäßrigen Ethanollösung. Das Extraktionsmittel CO₂ wird verdampft, kondensiert auf 150 bar komprimiert und mit einer Restbeladung von etwa 1 g Ethanol/kg CO₂ wieder in die Extraktionskolonne A zurückgeführt. Der auf diese Weise entalkoholisierte Wein enthält noch 1,1 bis 1,2 Gew.-% Ethanol. Mit diesem Verfahren kann daher der angestrebte Alkoholgehalt < 0,5 Vol.-% nicht erreicht werden.

### Beispiel 2 (erfindungsgemäß)

### Entalkoholisierung von Wein mit Regenerierung des Lösemittels CO₂ mit Hilfe von Wasser

Die Extraktion des Ethanols aus Wein wird unter den gleichen Druck- und Temperaturbedingungen wie in Beispiel 1 durchgeführt. Der CO₂-Strom beträgt hier ebenfalls 300 kg/h, die Weinmengen aber 20 kg/h. Bei der Entspannung des beladenen Lösemittels fallen ca. 2,4 kg/h einer etwa 50 %igen wäßrigen Ethanollösung an. Die Restbeladung des Kohlendioxids mit etwa 1 g Ethanol/kg CO₂ wird durch eine Wäsche bei 50 bar und 25°C mit 30 g Wasser/kg CO₂ auf unter 0,3 g/kg CO₂ verringert. Diese Restbeladung des Kohlendioxids reicht für eine Entalkoholisierung des Weines in der bestehenden Kolonne auf einen Alkoholgehalt von 0,4 Gew.-% aus.

## Patentansprüche

1. Verfahren zur Entfernung von Ethanol aus durch Vergärung erzeugten Getränken durch direkte Extraktion des Ethanols mit komprimiertem CO₂ als Extraktionsmittel, im Gegenstrom und Abscheidung des extrahierten Wasser-Ethanol-Gemisches aus dem Extraktionsmittel durch Dichteerniedrigung des komprimierten Gases,
**dadurch gekennzeichnet,**
daß das CO₂ nach der Dichteerniedrigung einer Gaswäsche mit 10 bis 300 g Wasser pro kg CO₂ unterzogen wird und mit einem Ethanol-Gehalt von weniger als 0,4 g/kg in die Extraktionsstufe zurückgeführt wird.

2. Verfahren nach Anspruch 1,
**dadurch gekennzeichnet,**
daß man die Extraktion mit CO₂ bei einem Druck von 75 bis 300 bar und einer Temperatur von < 40°C, insbesondere 10 bis 35°C, durchführt.

3. Verfahren nach Anspruch 2,
**dadurch gekennzeichnet,**
daß man pro kg Ausgangsgetränk 5 bis 100, vorzugsweise 10 bis 40 kg CO₂ einsetzt.

4. Verfahren nach einem der Ansprüche 1 bis 3,
**dadurch gekennzeichnet,**
daß man die Gegenstrom-Extraktion in einer Füllkörperkolonne durchführt.

5. Verfahren nach einem der Ansprüche 2 bis 4,
**dadurch gekennzeichnet,**
daß man die Abscheidung des Wasser-Ethanol-Gemisches bei einem Druck von 30 bis 60 bar und einer Temperatur von -10 bis +25°C durchführt.

6. Verfahren nach einem der vorhergehenden Ansprüche,
**dadurch gekennzeichnet,**
daß man die Regeneration des dichteerniedrigten CO₂ mit Wasser bei gleichem Druck wie bei der Abscheidung durchführt.

7. Verfahren nach einem der Ansprüche 1 bis 5,
**dadurch gekennzeichnet,**
daß man die Regeneration des dichteerniedrigten CO₂ mit Wasser bei den gleichen Druck- und Temperaturbedingungen vornimmt, die bei der Extraktion angewendet werden.

8. Verfahren nach einem der vorhergehenden Ansprüche,
**dadurch gekennzeichnet,**
daß man die Regeneration mit Wasser bei 10°C bis 40°C vornimmt.

9. Verfahren nach einem der vorhergehenden Ansprüche,
**dadurch gekennzeichnet,**
daß man das CO₂ kontinuierlich im Kreis führt.

## Claims

1. Process for the removal of ethanol from drinks produced by fermentation by direct extraction of the ethanol in countercurrent with compressed CO₂ as extraction agent and separation of the extracted water-ethanol mixture from the extraction agent by lowering of the density of the compressed gas, characterised in that, after the lowering of the density, the CO₂ is subjected to a gas wash with 10 to 300 g of water per kg of CO₂ and is returned to the extraction step with an ethanol content of less than 0.4 g/kg.

2. Process according to claim 1, characterised in that one carries out the extraction with CO₂ at a pressure of 75 to 300 bar and a temperature of < 40°C, especially 10 to 35°C.

3. Process according to claim 2, characterised in that, per kg of starting drink, one uses 5 to 10, preferably 10 to 40 kg of CO₂.

4. Process according to one of claims 1 to 3, characterised in that one carries out the counter-current extraction in a packed column.

5. Process according to one of claims 2 to 4, characterised in that one carries out the separation of the water-ethanol mixture at a pressure of 30 to 60 bar and at a temperature of -10 to +25°C.

6. Process according to one of the preceding claims, characterised in that one carries out the regeneration of the CO₂ of lowered density with water at the same pressure as in the case of the separation.

7. Process according to any of claims 1 to 5, characterised in that one carries out the regeneration of the CO₂ of lowered density with water under the same pressure and temperature conditions as are used in the case of the extraction.

8. Process according to one of the preceding claims, characterised in that one carries out the regeneration with water at 10°C to 40°C.

9. Process according to one of the preceding claims, characterised in that one passes the CO₂ continuously in a cycle.

## Revendications

1. Procédé pour l'élimination de l'éthanol de boissons obtenues par fermentation, par extraction directe de l'éthanol à contre-courant avec CO₂ comprimé en tant qu'agent d'extraction et séparation du mélange eau-éthanol extrait à partir de l'agent d'extraction par abaissement de la densité du gaz comprimé, caractérisé en ce que, après l'abaissement de la densité, le CO₂ est soumis à un lavage de gaz avec 10 à 300 g d'eau par kg de CO₂ et est recyclé dans l'étape d'extraction avec une teneur en éthanol inférieure à 0,4 g/kg.

2. Procédé selon la revendication 1, caractérisé en ce que l'on accomplit l'extraction avec CO₂ sous une pression de 75 à 300 bars et à une température inférieure à 40°C, en particulier comprise entre 10 et 35°C.

3. Procédé selon la revendication 2, caractérisé en ce que l'on utilise par kg de boisson de départ 5 à 100, de préférence 10 à 40 kg de CO₂.

4. Procédé selon l'une des revendications 1 à 3, caractérisé en ce que l'on accomplit l'extraction à contrecourant dans une colonne à garnissage.

5. Procédé selon l'une des revendications 2 à 4, caractérisé en ce que l'on accomplit la séparation du mélange eau-éthanol sous une pression de 30 à 60 bars et à une température de -10 à +25°C.

6. Procédé selon l'une des revendications précédentes, caractérisé en ce que l'on accomplit la régénération du CO₂ dont la densité a été abaissée avec de l'eau sous une pression identique à celle de la séparation.

7. Procédé selon l'une des revendications 1 à 5, caractérisé en ce que l'on accomplit la régénération du CO₂ dont la densité a été abaissée avec de l'eau dans les mêmes conditions de pression et de température que celles qui sont utilisées lors de l'extraction.

8. Procédé selon l'une des revendications précédentes, caractérisé en ce que l'on accomplit la régénération avec de l'eau entre 10°C et 40°C.

9. Procédé selon l'une des revendications précédentes, caractérisé en ce que l'on introduit le CO₂ en continu dans le circuit.
